# EUROPEAN PATENT SPECIFICATION

(11) **EP 3 445 614 B1**
(45) Date of publication and mention of the grant of the patent: **26.02.2020**
(21) Application number: 17772128.9
(22) Date of filing: 18.04.2017
(51) Int. Cl.: B62D 1/187, B60R 13/02

(54) **COVER BY ELASTIC MEMBER CONNECTION ASSEMBLY**
ABDECKUNG DURCH EINE ELASTISCHE VERBINDUNGSANORDNUNG
COUVERCLE PAR ENSEMBLE DE LIAISON À ÉLÉMENT ÉLASTIQUE

(30) Priority: 19.04.2016 TR 201605007
(43) Date of publication of application: 27.02.2019
(73) Proprietor: Tofas Turk Otomobil Fabrikasi Anonim Sirketi, Bursa (TR)
(72) Inventor: YETKINER, Emrah, Bursa (TR)
(74) Representative: Dericioglu, E. Korhan
(86) International application number: PCT/TR2017/050148
(87) International publication number: WO 2017/184097

(56) References cited:
- EP-A1- 2 151 354
- DE-C1- 4 337 721
- FR-A1- 2 980 757
- US-B2- 7 077 431

## Description

### Field of the Invention

The present invention particularly relates to a connection assembly which enables to connect the elastic materials used for covering the region between the steering wheel covering and the dashboard.

### Background of the Invention

In passenger vehicles, there are provided steering mechanisms which enable to control the vehicle and turn the bends. The steering wheel is provided on the front panel of the vehicle and it extends towards the driver from the front panel via a steering column. The steering mechanism used for directing the vehicle is adjustable so that its position can be determined. By means of this adjustable structure, the steering wheel can move towards and away from the front panel. Elastic surfaces compatible with the steering wheel adjustment are needed to cover the area between the steering wheel covering and the dashboard located on the front panel for decorative and safety purposes. This area is a region which is difficult to cover with elastic material in a stable manner with respect to the form, distance and area. The elastic members are comprised of at least two parts in order to provide aesthetic integrity at each position of the steering mechanism.

In the state of the art, the technique of assembling two or more elastic surfaces into one surface is used for covering the area between the steering wheel covering and the dashboard for decorative and safety purposes. In the said technique, one of the elastic surfaces extends from the vehicle steering wheel while the other extends from the front panel, and by connecting these two elastic surfaces, the space between the steering wheel and the instrument panel is covered. Techniques such as welding, seaming, additional welding material, adhesion are used for connecting the said two elastic surfaces. The connection techniques that are used are difficult processes with respect to labor and also cause disadvantage in terms of cost. Furthermore, these state-of-the-art techniques of connecting elastic surfaces cannot show sufficient resistance against problems such as rupture, falling, opening of the elastic surfaces due to factors of vibration and warm-cold temperatures that will occur throughout the vehicle's life.

The invention disclosed in the French patent document no. FR2927875(A1**)**, an application in the state of the art, relates to a shell for covering the gap between the vehicle steering column and vehicle front panel. The said shell is comprised of two parts and these two parts are slidably fixed on each other.

The United States patent document no. US7077431B2, an application in the state of the art, relates to a flexible gap covering, which is formed for covering the gap between the steering column of a motor vehicle and the instrument panel, and to the connection of the said flexible gap covering. In the said invention, the flexible covering is comprised of two pieces and the said two pieces are connected to each other by being sewn together or glued together in an overlapping area.

### Problems Solved by the Invention

The objective of the present invention is to provide an elastic member connection assembly which enables to connect the elastic surfaces located over the empty space between the vehicle steering wheel covering and the dashboard.

The objective of the present invention is to provide an elastic member connection assembly wherein a button method is used which enables an easier mounting/disassembly during connection of the elastic surfaces.

The objective of the present invention is to provide an elastic member connection assembly which provides an aesthetically pleasant appearance via the button connection method.

### Detailed Description of the Invention

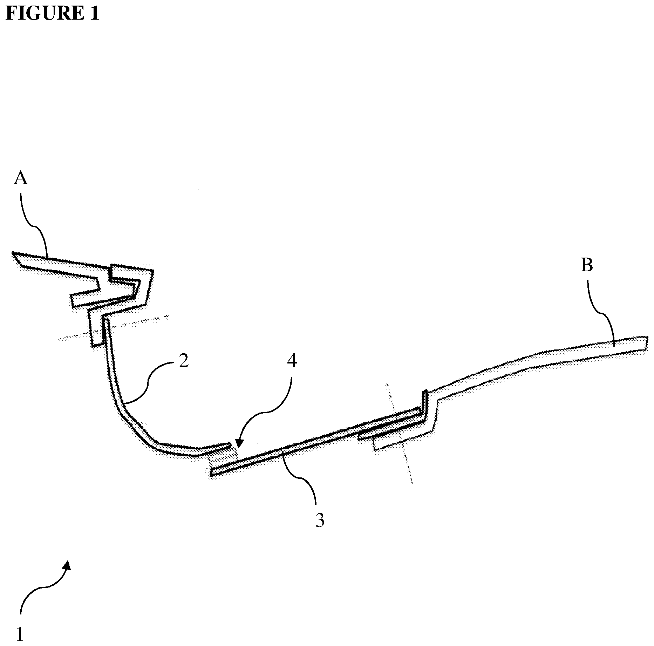

The innovative elastic member connection assembly developed to fulfill the objective of the present invention is illustrated in the accompanying figures, in which
**Figure 1** is a side view of the innovative elastic member connection assembly of the present invention.

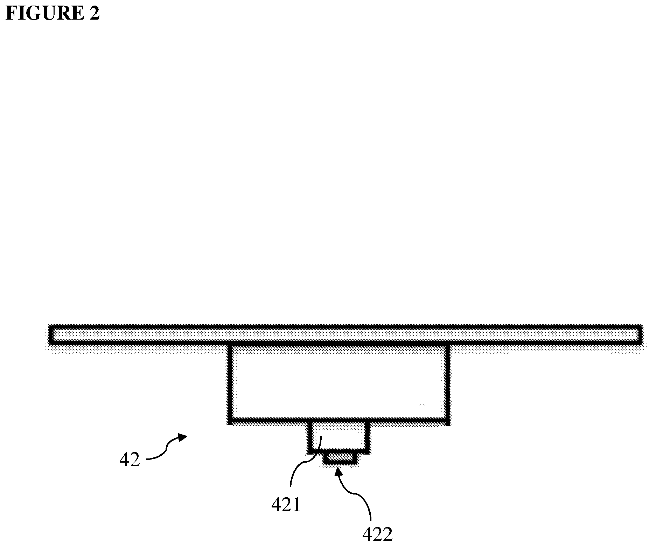

**Figure 2** is a side view of the male piece in the innovative elastic member connection assembly of the present invention.

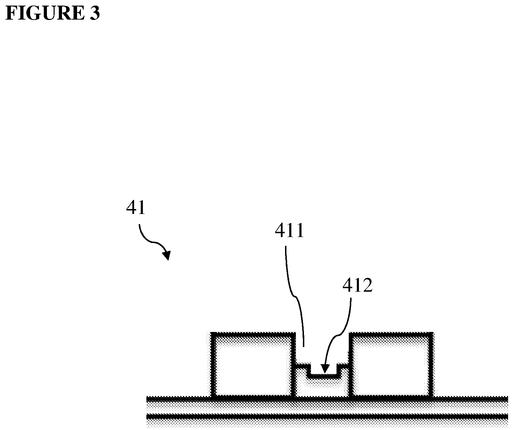

**Figure 3** is a side view of the female piece in the innovative elastic member connection assembly of the present invention.

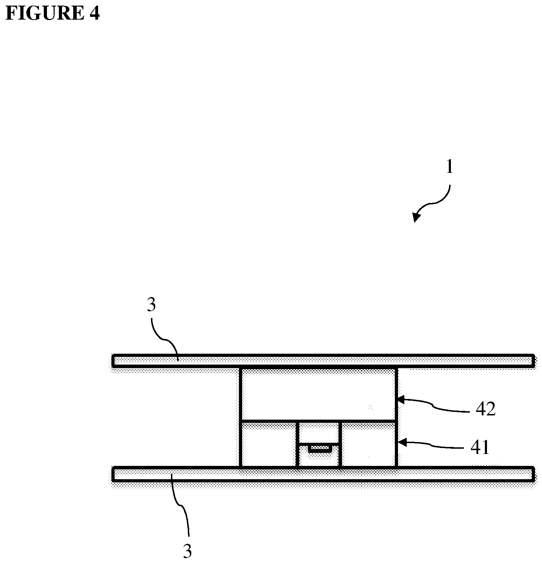

**Figure 4** is a side view of the lock mechanism in the innovative elastic member connection assembly of the present invention.

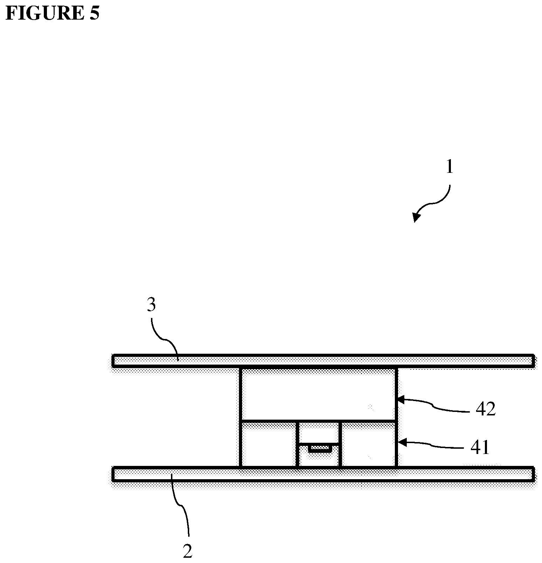

**Figure 5** is a side view of another version of the lock mechanism in the innovative elastic member connection assembly of the present invention.

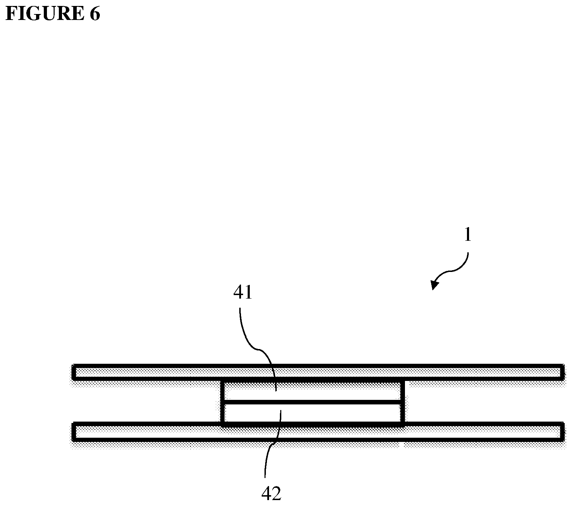

**Figure 6** is a side view of textile band application in the lock mechanism in the innovative elastic member connection assembly of the present invention.

The components shown in the figures are each given reference numbers as follows:
**1.** Connection button assembly
**2.** First elastic member
**3.** Second elastic member
**4.** Lock mechanism
   **41.** Female piece
      **411.** Guiding opening
      **412.** Recess
   **42.** Male piece
      **421.** Ridge
      **422.** Protrusion
**A.** Steering wheel covering
**B.** Dashboard

The connection button assembly (1) which enables to cover the area remaining between the steering wheel covering (A) and the dashboard (B) basically comprises
- at least one first elastic member (2) which extends from the steering wheel covering (A) towards the area remaining between the steering wheel covering (A) and the dashboard (B),
- at least one second elastic member (3), which extends from the vehicle dashboard (B) towards the first elastic member (2), and which, upon being connected with the first elastic member (2), covers the area remaining between the steering wheel covering (A) and the dashboard (B),
- at least one lock mechanism (4) which enables to connect the first elastic member (2) and the second elastic member (3) to each other and which comprises
   - at least one female piece (41) which is fixed on the first elastic member (2) or the second elastic member (3) and contains at least one recess (412) thereon,
   - at least one male piece (42) which is fixed on the first elastic member (2) or the second elastic member (3) so as to correspond to the female piece (41), contains thereon at least one protrusion (422) which extends so as to interference-fit into the recess (412), and is locked to the female piece (41) when the recess (412) and the protrusion (422) are engaged.

The connection button assembly (1) of the present invention is located over the gap remaining between the steering wheel covering (A) that covers the vehicle steering wheel and the vehicle dashboard (B). A decorative cover is formed which is comprised of two parts namely a first elastic member (2) and a second elastic member (3) for covering the gap remaining between the steering wheel covering (A) and the vehicle dashboard (B). There is provided a lock mechanism (4) comprising a female piece (41) and a male piece (42) for connecting the first elastic member (2) and the second elastic member (3) to each other.

In one embodiment of the invention, there is provided at least one lock mechanism (4), which enables to connect the first elastic member (2) and the second elastic member (3) to each other and comprises
- at least one female piece (41) which is fixed on the first elastic member (2) or the second elastic member (3) and contains thereon at least one guiding opening (411) in the form of a cavity and at least one recess (412) in the guiding opening (411),
- at least one male piece (42) which is fixed on the first elastic member (2) or the second elastic member (3) so as to correspond to the female piece (41), contains thereon at least one ridge (421) that fits into the guiding opening (411) and at least one protrusion (422) provided at the end of the ridge (421) to interference-fit into the recess (412), and is locked to the female piece (41) when the recess (412) and the protrusion (422) are engaged,
and which enables to protect the recess (412) and the protrusion (422) against external factors by means of the guiding opening (411) and the ridge (421).

In the connection button assembly (1) of the present invention, the first elastic member (2) extends from the steering wheel covering (A) located on the vehicle steering wheel, and upon being connected with the second elastic member (3) extending from the dashboard (B), covers the area remaining between the vehicle steering wheel covering (A) and the dashboard (B). Due to the fact that the first elastic member (2) and the second elastic member (3) can stretch, they are not affected by the movement of the vehicle steering wheel and they ensure that the area between the steering wheel covering (A) and the dashboard (B) remains covered continuously.

In the connection button assembly (1) of the present invention, the lock mechanism (4) is comprised of a female piece (41) and a male piece (42) that engages with the female piece (41). The female piece (41) is fixed onto the first elastic member (2). The male piece (42) is fixed onto the second elastic member (3) such that it corresponds to the female piece (41). When the area remaining between the steering wheel covering (A) and the dashboard (B) is covered, the ridge (421) provided on the male piece (42) is placed into the guiding opening (411) provided on the female piece (41), and by means of the force exerted by the user, the protrusion (422) provided on the male piece (42) interference-fits into the recess (412) provided on the female piece (41), and thus the first elastic member (2) and the second elastic member (3) are connected to each other. When the first elastic member (2) and the second elastic member (3) are intended to be disconnected from each other, the user exerts force on the male piece (42) so as to move it away from the female piece (41), and thus the protrusion (422) on the male piece (42) is removed from the recess (412) on the female piece (41). Thus, the first elastic member (2) and the second elastic member (3) are disconnected from each other. In a preferred embodiment of the invention, the female piece (41) is provided on the second elastic member (3), and the male piece (42) corresponding to the female piece (41) is provided on the first elastic member (2).

In one embodiment of the invention, the protrusion (422) fitting into the recess (412) on the female piece (41) has a circular form, and its size is larger than that of the entrance part of the recess (412). Hence, after the interference-fit, more force is required to remove the protrusion (422) from the recess (412), and the lock mechanism (4) is affected less by the vibration, temperature and similar factors that it is exposed to.

In one embodiment of the invention, the lock mechanism (4) has a snap structure. With the snap structure, the protrusion (422), which fits into the recess (412), enables to connect the first elastic member (2) and the second elastic member (3) to each other.

In one embodiment of the invention, ultrasonic connection technique is used for fixing the first elastic member (2) to the vehicle steering wheel covering (A) from one side thereof, and fixing the second elastic member (3) to the vehicle dashboard (B). With the ultrasonic connection technique, the first elastic member (2) and the second elastic member (3) are welded to the place where they are connected by means of vibration and heating technique.

In one embodiment of the invention, magnets of positive and negative poles are placed on the male piece (42) and female piece (41) forming the lock mechanism (4), and the male piece (42) is enabled to be mounted onto the female piece (41) with more force.

In one embodiment of the invention, the male piece (42) and female piece (41) forming the lock mechanism (4) are made of a plastic material.

In one embodiment of the invention, the male piece (42) and female piece (41) forming the lock mechanism (4) are made of a metal material.

In one embodiment of the invention, the lock mechanism in the button assembly is applied as a technique of fastening via a textile band also known as velcro (hook and loop) fastener.

In one embodiment of the invention, there is provided at least one lock mechanism (4) which enables to connect the first elastic member (2) and the second elastic member (3) to each other and which comprises
- at least one female piece (41) which is fixed on the first elastic member (2) or the second elastic member (3) and contains a fibrous structure thereon,
- at least one male piece (42) which is fixed on the first elastic member (2) or the second elastic member (3) so as to correspond to the female piece (41), and contains thereon hooks that can hold the fibers,
and which forms a textile band feature as the male piece (42) holds the female piece (41).

## Claims

1. A connection button assembly (1), which enables to cover the area remaining between the steering wheel covering (A) and the dashboard (B), **comprising**
- at least one first elastic member (2) which extends from the steering wheel covering (A) towards the area remaining between the steering wheel covering (A) and the dashboard (B),
- at least one second elastic member (3), which extends from the vehicle dashboard (B) towards the first elastic member (2), and which, upon being connected with the first elastic member (2), covers the area remaining between the steering wheel covering (A) and the dashboard (B), and
**characterized by**
- at least one lock mechanism (4) which enables to connect the first elastic member (2) and the second elastic member (3) to each other and which comprises
• at least one female piece (41) which is fixed on the first elastic member (2) or the second elastic member (3) and contains at least one recess (412) thereon,
• at least one male piece (42) which is fixed on the first elastic member (2) or the second elastic member (3) so as to correspond to the female piece (41), contains thereon at least one protrusion (422) which extends so as to interference-fit into the recess (412), and is locked to the female piece (41) when the recess (412) and the protrusion (422) engage.

2. A connection button assembly (1) according to Claim 1, **characterized by** at least one lock mechanism (4) which enables to connect the first elastic member (2) and the second elastic member (3) to each other and which comprises
• at least one female piece (41) which is fixed on the first elastic member (2) or the second elastic member (3) and contains thereon at least one guiding opening (411) in the form of a cavity and at least one recess (412) in the guiding opening (411),
• at least one male piece (42) which is fixed on the first elastic member (2) or the second elastic member (3) so as to correspond to the female piece (41), contains thereon at least one ridge (421) that fits into the guiding opening (411) and at least one protrusion (422) provided at the end of the ridge (421) to interference-fit into the recess (412), and is locked to the female piece (41) when the recess (412) and the protrusion (422) are engaged,
and which enables to protect the recess (412) and the protrusion (422) against external factors by means of the guiding opening (411) and the ridge (421).

3. A connection button assembly (1) according to Claim 1 or 2, **comprising** a protrusion (422) which has a circular form.

4. A connection button assembly (1) according to Claim 1 to 3, **comprising** a protrusion (422) whose size is larger than the upper perimeter of the recess (412) to ensure interference-fit.

5. A connection button assembly (1) according to Claim 1, **comprising** first elastic member (2) which is fixed to the vehicle steering wheel covering (A) from one side thereof via ultrasonic connection technique.

6. A connection button assembly (1) according to Claim 1, **comprising** second elastic member (3) which is fixed to the vehicle dashboard (B) from one side thereof via ultrasonic connection technique.

7. A connection button assembly (1) according to any one of the preceding claims, **comprising** the recess (412) and the protrusion (422), which enable the male piece (42) to be fastened to the female piece (41) more tightly, and one of which includes a positive pole magnet while the other a negative pole magnet.

8. A connection button assembly (1) according to Claim 1 or 2, **comprising** a female piece (41) and a male piece (42) made of plastic material.

9. A connection button assembly (1) according to Claim 1 or 2, **comprising** a female piece (41) and a male piece (42) made of metal material.

10. A connection button assembly (1), which enables to cover the area remaining between the steering wheel covering (A) and the dashboard (B), **comprising**
- at least one first elastic member (2) which extends from the steering wheel covering (A) towards the area remaining between the steering wheel covering (A) and the dashboard (B),
- at least one second elastic member (3), which extends from the vehicle dashboard (B) towards the first elastic member (2), and which, upon being connected with the first elastic member (2), covers the area remaining between the steering wheel covering (A) and the dashboard (B), and **characterized by**
- at least one lock mechanism (4) which enables to connect the first elastic member (2) and the second elastic member (3) to each other and which comprises
• at least one female piece (41) which is fixed on the first elastic member (2) or the second elastic member (3) and contains a fibrous structure thereon,
• at least one male piece (42) which is fixed on the first elastic member (2) or the second elastic member (3) so as to correspond to the female piece (41), and contains thereon hooks that can hold the fibers,
and which forms a textile band feature as the male piece (42) holds the female piece (41).

## Patentansprüche

1. Verbindungstastenanordnung (1), die es ermöglicht, den zwischen der Lenkradabdeckung (A) und dem Armaturenbrett (B) verbleibenden Bereich abzudecken, **umfassend**
- einem ersten elastischen Element (2), das sich von der Lenkradabdeckung (A) in Richtung des zwischen der Lenkradabdeckung (A) und dem Armaturenbrett (B) verbleibenden Bereichs erstreckt,
- mindestens ein zweites elastisches Element (3), das sich vom Fahrzeug-Armaturenbrett (B) zum ersten elastischen Element (2) hin erstreckt und das bei Verbindung mit dem ersten elastischen Element (2) den zwischen der Lenkradabdeckung (A) und dem Armaturenbrett (B) verbleibenden Bereich abdeckt, und
**gekennzeichnet durch**
- mindestens einen Verriegelungsmechanismus (4), der es ermöglicht, das erste elastische Element (2) und das zweite elastische Element (3) miteinander zu verbinden und der Folgendes umfasst
• mindestens eine weibliches Teil (41), das an dem ersten elastischen Element (2) oder dem zweiten elastischen Element (3) befestigt ist und mindestens eine Aussparung (412) aufweist,
• mindestens ein männliches Teil (42), das an dem ersten elastischen Element (2) oder dem zweiten elastischen Element (3) befestigt ist, so dass es dem weiblichen Teil (41) entspricht, enthält darauf, mindestens einen Vorsprung (422), der sich formschlüssig in die Aussparung (412) erstreckt und mit dem weiblichen Teil (41) verriegelt ist, wenn die Aussparung (412) und der Vorsprung (422) ineinander greifen.

2. Verbindungstastenanordnung (1) nach Anspruch 1, **gekennzeichnet durch** mindestens einen Verriegelungsmechanismus (4), der es ermöglicht, das erste elastische Element (2) und das zweite elastische Element (3) miteinander zu verbinden, und der Folgendes umfasst
• mindestens ein weibliches Teil (41), das an dem ersten elastischen Element (2) oder dem zweiten elastischen Element (3) befestigt ist und daran mindestens eine Führungsöffnung (411) in Form eines Hohlraums und mindestens eine Aussparung (412) in der Führungsöffnung (411) enthält,
• mindestens ein männliches Teil (42), das auf dem ersten elastischen Element (2) oder dem zweiten elastischen Element (3) befestigt ist, so dass es dem weiblichen Teil (41) entspricht, enthält darauf mindestens eine Rippe (421), die in die Führungsöffnung (411) passt, und mindestens einen Vorsprung (422), der am Ende der Rippe (421) vorgesehen ist, um in die Aussparung (412) formschlüssig zu passen, und der mit dem weiblichen Teil (41) verriegelt ist, wenn die Aussparung (412) und der Vorsprung (422) ineinander greifen,
und der es ermöglicht, die Aussparung (412) und den Vorsprung (422) durch die Führungsöffnung (411) und die Rippe (421) vor äußeren Einflüssen zu schützen.

3. Verbindungstastenanordnung (1) nach Anspruch 1 oder 2, **umfassend** einen Vorsprung (422), der eine kreisförmige Form aufweist.

4. Verbindungstastenanordnung (1) nach Ansprüchen 1 bis 3, **umfassend** einen Vorsprung (422), dessen Größe größer als der obere Umfang der Aussparung (412) ist, um einen formschlüssigen Sitz zu gewährleisten.

5. Verbindungstastenanordnung (1) nach Anspruch 1, **umfassend** ein ersten elastischen Element (2), das an der Fahrzeug-Lenkradabdeckung (A) von einer Seite aus mittels Ultraschallverbindungstechnik befestigt ist.

6. Verbindungstastenanordnung (1) nach Anspruch 1, **umfassend** ein zweites elastisches Element (3), das an einer Seite des Fahrzeug-Armaturenbretts (B) mittels Ultraschallverbindungstechnik befestigt ist.

7. Verbindungstastenanordnung (1) nach einem der vorhergehenden Ansprüche, **umfassend** die Aussparung (412) und den Vorsprung (422), die es ermöglichen, das männliche Teil (42) enger an dem weiblichen Teil (41) zu fixieren, und von denen einer einen positiven Polmagneten und der andere einen negativen Polmagneten aufweist.

8. Verbindungstastenanordnung (1) nach Anspruch 1 oder 2, **umfassend** ein weibliches Teil (41) und ein männliches Teil (42) aus Kunststoff.

9. Verbindungstastenanordnung (1) nach Anspruch 1 oder 2, **umfassend** ein weibliches Teil (41) und ein männliches Teil (42) aus Metallmaterial.

10. Verbindungstastenanordnung (1), die es ermöglicht, den zwischen der Lenkradabdeckung (A) und dem Armaturenbrett (B) verbleibenden Bereich abzudecken, **umfassend**
- mindestens ein erstes elastisches Element (2), das sich von der Lenkradabdeckung (A) in Richtung des zwischen der Lenkradabdeckung (A) und dem Armaturenbrett (B) verbleibenden Bereichs erstreckt,
- mindestens ein zweites elastisches Element (3), das sich vom Fahrzeug-Armaturenbrett (B) zum ersten elastischen Element (2) hin erstreckt und das bei Verbindung mit dem ersten elastischen Element (2) den zwischen der Lenkradabdeckung (A) und dem Armaturenbrett (B) verbleibenden Bereich abdeckt, und **gekennzeichnet durch**
- mindestens einen Verriegelungsmechanismus (4), der es ermöglicht, das erste elastische Element (2) und das zweite elastische Element (3) miteinander zu verbinden und der Folgendes umfasst
• mindestens ein weibliches Teil (41), das an dem ersten elastischen Element (2) oder dem zweiten elastischen Element (3) befestigt ist und darauf eine Faserstruktur aufweist,
• mindestens ein männliches Teil (42), das an dem ersten elastischen Element (2) oder dem zweiten elastischen Element (3) befestigt ist, so dass es dem weiblichen Teil (41) entspricht, und enthält darauf Haken, die die Fasern halten können,
und das ein Textilbandmerkmal bildet, da das männliche Teil (42) das weibliche Teil (41) hält.

## Revendications

1. Ensemble de bouton de connexion (1), qui permet de couvrir la zone restante entre le revêtement du volant (A) et le tableau de bord (B), **comprenant**
- au moins un premier élément élastique (2) qui s'étend depuis le revêtement du volant (A) vers la zone restant entre le revêtement du volant (A) et le tableau de bord (B),
- au moins un deuxième élément élastique (3), qui s'étend du tableau de bord (B) du véhicule vers le premier élément élastique (2), et qui, lors de sa connexion avec le premier élément élastique (2), couvre la zone restant entre le revêtement du volant (A) et le tableau de bord (B), et
**caractérisé par**
- au moins un mécanisme de verrouillage (4) qui permet de connecter le premier élément élastique (2) et le deuxième élément élastique (3) l'un à l'autre et qui comprend
• au moins une pièce femelle (41) qui est fixée sur le premier élément élastique (2) ou le deuxième élément élastique (3) et qui contient au moins un évidement (412) sur celle-ci,
• au moins une pièce mâle (42) qui est fixée sur le premier élément élastique (2) ou le deuxième élément élastique (3) de manière à correspondre à la pièce femelle (41), contient sur celle-ci au moins une saillie (422) qui s'étend de manière à s'emboîter dans l'évidement (412), et est verrouillé sur la pièce femelle (41) lorsque l'évidement (412) et la saillie (422) s'engagent.

2. Ensemble de bouton de connexion (1) selon la revendication 1, **caractérisé par** au moins un mécanisme de verrouillage (4) qui permet de connecter le premier élément élastique (2) et le deuxième élément élastique (3) l'un à l'autre et qui comprend
• au moins une pièce femelle (41) qui est fixée sur le premier élément élastique (2) ou le deuxième élément élastique (3) et contient sur celle-ci au moins une ouverture de guidage (411) sous la forme d'une cavité et au moins un évidement (412) dans l'ouverture de guidage (411),
• au moins une pièce mâle (42) qui est fixée sur le premier élément élastique (2) ou le deuxième élément élastique (3) de manière à correspondre à la pièce femelle (41), contient sur celle-ci au moins une arête (421) qui s'adapte dans l'ouverture de guidage (411) et au moins une saillie (422) prévue à l'extrémité de l'arête (421) pour un ajustement serré dans l'évidement (412), et est verrouillé sur la pièce femelle (41) lorsque l'évidement (412) et la saillie (422) s'engagent,
et qui permet de protéger l'évidement (412) et la saillie (422) contre les facteurs extérieurs au moyen de l'ouverture de guidage (411) et de l'arête (421).

3. Ensemble de bouton de connexion (1) selon la revendication 1 ou 2, **comprenant** une saillie (422) qui a une forme circulaire.

4. Ensemble de bouton de connexion (1) selon la revendication 1 à 3, **comprenant** une saillie (422) dont la taille est plus grande que le périmètre supérieur de l'évidement (412) pour assurer un ajustement serré.

5. Ensemble de bouton de connexion (1) selon la revendication 1, **comprenant** un premier élément élastique (2) qui est fixé sur le revêtement du volant (A) du véhicule par un côté de celui-ci par une technique de connexion ultrasonique.

6. Ensemble de bouton de connexion (1) selon la revendication 1, **comprenant** un deuxième élément élastique (3) qui est fixé sur le tableau de bord (B) du véhicule d'un côté de celui-ci par une technique de connexion ultrasonique.

7. Ensemble de bouton de connexion (1) selon l'une quelconque des revendications précédentes, **comprenant** l'évidement (412) et la saillie (422), qui permettent à la pièce mâle (42) d'être fixée à la pièce femelle (41) de manière plus serrée, et dont l'un comprend un aimant à pôle positif et l'autre un aimant à pôle négatif.

8. Ensemble de bouton de connexion (1) selon la revendication 1 ou 2, **comprenant** une pièce femelle (41) et une pièce mâle (42) en matière plastique.

9. Ensemble de bouton de connexion (1) selon la revendication 1 ou 2, **comprenant** une pièce femelle (41) et une pièce mâle (42) en matériau métallique.

10. Ensemble de bouton de connexion (1), qui permet de couvrir la zone restante entre le revêtement du volant (A) et le tableau de bord (B), **comprenant**
- au moins un premier élément élastique (2) qui s'étend depuis le revêtement du volant (A) vers la zone restant entre le revêtement du volant (A) et le tableau de bord (B),
- au moins un deuxième élément élastique (3), qui s'étend du tableau de bord (B) du véhicule vers le premier élément élastique (2), et qui, lors de sa connexion avec le premier élément élastique (2), couvre la zone restant entre le revêtement du volant (A) et le tableau de bord (B), et **caractérisé par**
- au moins un mécanisme de verrouillage (4) qui permet de connecter le premier élément élastique (2) et le deuxième élément élastique (3) l'un à l'autre et qui comprend
• au moins une pièce femelle (41) qui est fixée sur le premier élément élastique (2) ou le deuxième élément élastique (3) et contient une structure fibreuse,
• au moins une pièce mâle (42) qui est fixée sur le premier élément élastique (2) ou le deuxième élément élastique (3) de manière à correspondre à la pièce femelle (41), et contient des crochets qui peuvent tenir les fibres,
et qui forme une bande textile caractéristique puisque la pièce mâle (42) tient la pièce femelle (41).
